(19) Europäisches Patentamt
European Patent Office
Office européen des brevets

(11) Veröffentlichungsnummer: **0 064 478**
**B1**

(12) **EUROPÄISCHE PATENTSCHRIFT**

(45) Veröffentlichungstag der Patentschrift: **27.11.85**

(21) Anmeldenummer: **82810161.8**

(22) Anmeldetag: **19.04.82**

(51) Int. Cl.⁴: **A 01 N 39/04,** A 01 N 39/02, A 01 N 37/40 // (A01N39/04, 37:40),(A01N39/02, 37:40),(A01N37/40, 37:10)

(54) **Herbizide Mittel.**

(30) Priorität: **24.04.81 GB 8112773**

(43) Veröffentlichungstag der Anmeldung: **10.11.82 Patentblatt 82/45**

(45) Bekanntmachung des Hinweises auf die Patenterteilung: **27.11.85 Patentblatt 85/48**

(84) Benannte Vertragsstaaten: **AT BE CH DE FR GB IT LI LU NL SE**

(56) Entgegenhaltungen:
**DE - A - 1 667 964**
**GB - A - 1 097 713**

(73) Patentinhaber: **CIBA-GEIGY AG, Postfach, CH-4002 Basel (CH)**

(72) Erfinder: **Dyer, Ross Mortimore Ward, 46 The Limes, Harston Nr. Cambridge CB2 8QT (GB)**
Erfinder: **Nowak, Edward, 12 Alice Way, Histon Cambridge CB4 4YA (GB)**

**EP 0 064 478 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wässrige herbizide Mittel, die

a) einen oder mehrere Ester der Formel I

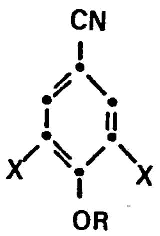

I

worin beide X für ein Halogenatom stehen und R eine gegebenenfalls substituierte Acylgruppe bedeutet, die abgeleitet ist von einer aliphatischen Carbonsäure mit 1–12 Kohlenstoffatomen, und

b) ein oder mehrere kernchlorierte Phenyl-, Phenylalkyl- oder Phenoxyalkylcarbonsäuresalze der Formel II

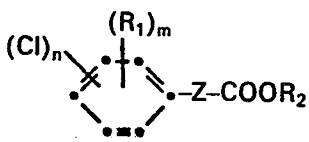

II

enthält, worin n die Zahlen 1, 2 oder 3, m die Zahlen von 1 bis 4, $R_1$ Wasserstoff, $C_1$–$C_{12}$-Alkyl oder $C_1$–$C_{12}$-Alkoxy, Z eine direkte Bindung oder eine unverzweigte oder verzweigte Alkylenbrücke mit 1–6 Kohlenstoffatomen, vorzugsweise 1–3 Kohlenstoffatomen, oder eine unverzweigte oder verzweigte Sauerstoffalkylenbrücke mit 1–6 Kohlenstoffatomen, wobei das Sauerstoffatom direkt an den Benzolring gebunden ist, und $R_2$ ein Alkalimetallatom, eine primäre, sekundäre oder tertiäre Alkylamino-, Hydroxyalkylamino- oder -ammoniumgruppe bedeuten. Das relative Gewichtsverhältnis von Komponente (b) zur Komponente (a) beträgt mindestens 3:1, wodurch ein stabiles Produkt erhalten wird.

Diese bekannten Herbizide sind in verschiedenen Formen verfügbar, z.B.:

a) als freies Phenol (HBNs) oder freie Carbonsäure (Chlorphenoxyalkansäuren) und

b) als entsprechende Alkali- oder Amin-Salze; oder

c) als entsprechende Ester, z.B. als Oktan- oder Heptansäure- Ioxynil- oder -Bromoxynilester und als (±)-2-(4-Chlor-2-methylphenoxy)-propionsäure-isooktylester.

In der gewerblichen Praxis werden die Phenole und Säuren (Gruppe a) gewöhnlich nicht verwendet, da die Salz- und Esterformen leichter zu formulieren sind. Die Salze, die wasserlöslich sind, werden als wässrige Konzentrate und die Ester, die in Öl löslich sind, als emulgierbare Konzentrate in organischen Lösungsmitteln formuliert. Solche Mischungen sind aus der GB-A-1 097 713 und aus der DE-A-1 667 964 bekannt.

Die emulgierbaren Konzentrate der Ester haben gewisse Nachteile, die von den Problemen herrühren, die mit der Notwendigkeit der Verwendung von relativ grossen Mengen organischer Lösungsmittel verbunden sind. Es sind dies, neben Risiken für den Anwender und Risiken bei der Herstellung, die höheren Kosten. Ausserdem können die Chlorphenoxyalkansäureester, besonders diejenigen mit kurzkettigen Alkoholresten, z.B. Butylester, den möglichen Nachteil der Flüchtigkeit haben, der unter bestimmten Umständen zur Abtrift von dampfförmigem Wirkstoff auf anstossende Felder mit nachfolgender Schädigung der Kultur führen kann.

Wässrige Konzentrate von Salzen sind im allgemeinen biologisch weniger aktiv und weniger regenbeständig als ihre Ester-Gegenstücke.

Überraschenderweise haben wir jetzt gefunden, dass die genannten Nachteile von bekannten herbiziden Mitteln durch die Verwendung von gemischten wässrigen Salz/Ester-Formulierungen überwunden werden können. Diese Kombination von Wirkstoffen ergibt ein Produkt, das alle Vorteile der HBN-Ester besitzt und das ein kernchloriertes Phenyl-, Phenylalkyl- oder Phenoxyalkylcarbonsäuresalz enthält, das verglichen mit seinem Ester-Gegenstück eine geringe Flüchtigkeit aufweist. Das Lösungsmittel ist hauptsächlich Wasser, das billig und ungefährlich ist.

Bisher sind die lipophilen HBN-Ester und die hydrophilen Chlorphenoxyalkansäuresalze noch nicht zusammen im gleichen Produkt formuliert worden. Gegenwärtige Praxis ist es, ein emulgierbares Konzentrat des HBN-Esters und ein wässriges Konzentrat der Chlorphenoxyalkansäuresalz-Lösung zu verdünnen und im Sprühtank zusammen zu mischen oder eine «Nur-Salz»- oder «Nur-Ester»-Formulierung zu verwenden, die HBNs und Chlorphenoxyalkansäuren enthält.

Entsprechend stellt die vorliegende Erfindung ein wässriges herbizides Mittel bereit, das

a) einen oder mehrere Ester der Formel I

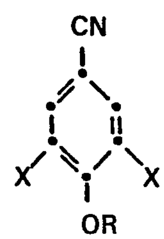

I

worin beide X für ein Halogenatom, vorzugsweise Brom oder Jod stehen und R eine gegebenenfalls substituierte Acylgruppe bedeutet, die abgeleitet ist von einer aliphatischen Carbonsäure mit 1–12, vorzugsweise 1–8 und insbesondere 2–8 Kohlenstoffatomen, und

b) ein oder mehrere kernchlorierte Phenyl-, Phenylalkyl- oder Phenoxyalkylcarbonsäuresalze der Formel II

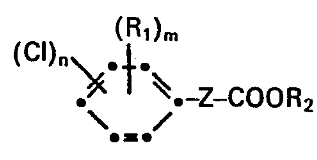

II

enthält, worin n die Zahlen 1, 2 oder 3, m die Zahlen von 1 bis 4, $R_1$ Wasserstoff, $C_1$–$C_{12}$-Alkyl, vorzugsweise $C_1$–$C_4$-Alkyl und insbesondere Methyl, oder $C_1$–$C_{12}$-Alkoxy, vorzugsweise $C_1$–$C_4$-Alkoxy, Z eine direkte Bindung oder eine unverzweigte oder verzweigte Alkylenbrücke mit 1–6 Kohlenstoffatomen, vorzugsweise 1–3 Kohlenstoffatomen, oder eine unverzweigte oder verzweigte Sauerstoffalkylenbrücke mit 1–6, vorzugsweise 1–3 Kohlenstoffatomen, wobei das Sauerstoffatom direkt an den Benzolring gebunden ist, und $R_2$ ein Alkalimetallatom, vorzugsweise Kalium, eine primäre, sekundäre oder tertiäre Alkylamino-, Hydroxyalkylamino- oder -ammoniumgruppe bedeuten, wobei das relative Gewichtsverhältnis von Komponente (b) zur Komponente (a) mindestens 3:1 beträgt.

Vorzugsweise bedeuten die Substituenten X in der Formel I das gleiche Halogenatom und sind beide Brom oder beide Jod. R in einer Verbindung der Formel I ist vorzugsweise eine unsubstituierte Acylgruppe, abgeleitet von z.B. Ameisensäure, Essigsäure, Propionsäure, Buttersäure, Hexansäure, Oktansäure oder Laurinsäure.

Besonders interessante Verbindungen der Formel I sind diejenigen, in denen beide X für Brom oder beide X für Jod und R für Propionyl, Butyryl oder insbesondere für Oktanoyl stehen.

Vorzugsweise bedeutet $R_2$ in der Formel II Natrium oder Kalium, Dimethyl- oder Diäthylamin, Mono-, Di- oder Triäthanolamin oder eine Ammoniumgruppe.

Bevorzugte Verbindungen der Formel II haben die folgenden Formeln:

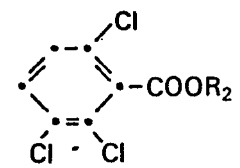

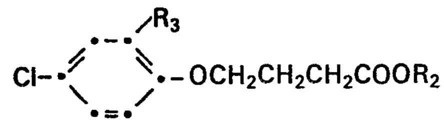

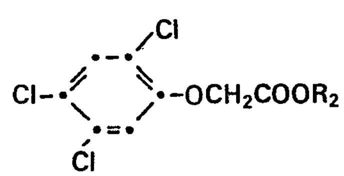

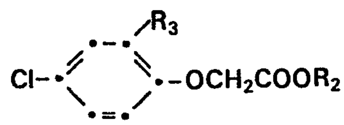

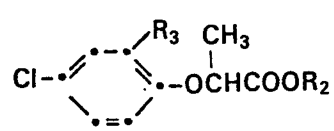

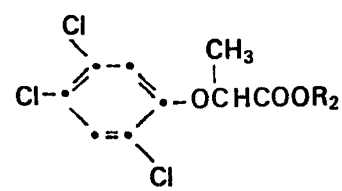

worin $R_2$ die obige Bedeutung hat und $R_3$ Chlor oder Methyl ist.

Es ist sehr überraschend und unerwartet, dass die lipophilen Verbindungen der Formel I in wässrigen Lösungen löslich sind und dass sie geeignet sind, erfolgreich als wässrige Konzentrate formuliert zu werden.

Besonders vom kaufmännischen Standpunkt aus ist es wichtig, dass die flüssigen herbiziden Mischungsformulierungen, wie sie erfindungsgemäss beschrieben sind, wenigstens die folgenden Eigenschaften besitzen:

1. Sie sind homogene Produkte, die unter normalen Lagerbedingungen sich nicht zersetzen oder auskristallisieren.

2. Sie bilden leicht eine stabile Dispersion oder Lösung, wenn sie zu Wasser in einem Sprühtank zugesetzt werden. Diese Eigenschaft wird im Laboratorium nach dem CIPAC-Test Nr. MT 36, einem offiziellen Test des Collaborative International Pesticides Analytical Committee geprüft.

3. Sie sind physikochemisch stabil. Diese Eigenschaft wird durch Lagerung des Produkts in der fertigen Verpackung für den vorgesehenen Haltbarkeitszeitraum und anschliessende Überprüfung der Eigenschaften 1 und 2 sowie Messung der Veränderung des Wirkstoffgehalts geprüft.

4. Sie haben eine zufriedenstellende Tief-Temperatur-Stabilität, d.h. die Formulierung kristallisiert bei tiefen Temperaturen nicht aus. Die Formulierungen werden nach dem CIPAC-Test Nr. MT 39, einem offiziellen Test des Collaborative International Analytical Committee, geprüft.

Die obigen Merkmale (1–4) werden von den in dieser Erfindung beanspruchten Mitteln nur dann erfüllt, wenn man die wesentlichen, erfindungsgemässen Merkmale anwendet.

Die obigen Eigenschaften hängen von einer Anzahl von Faktoren ab.

Erstens ist die Konzentration der Verbindungen der Formel II wichtig, denn je höher die Konzentration dieser Verbindungen ist, desto höher ist auch der ölauflösende Effekt (hydroper Effekt) auf die Verbindungen der Formel I.

Zweitens ist die chemische Struktur der Verbindungen der Formel II wichtig.

Der auflösende Effekt der kernchlorierten Phenyl-, Phenylalkyl- oder Phenoxyalkylcarbonsäuresalz-Lösungen wird erhöht mit steigender Länge der Alkylreste und vermindert, je grösser die Anzahl der Halogenatome ist, die am Arylring

substituiert sind. Dabei ist letzterer Effekt weniger ausgeprägt als der erstgenannte. Die folgende Reihe von Verbindungen illustriert die obige Feststellung.

Die Säuren in der Reihenfolge nach abnehmendem auflösenden Effekt ihrer Salze:
4-(4-Chlor-2-methylphenoxy)-buttersäure (MCPB),
4-(2,4-Dichlorphenoxy)-buttersäure (2,4-DB),
(±)-2-(4-Chlor-2-methylphenoxy)-propionsäure (Mecoprop),
4-Chlor-2-methylphenoxy-essigsäure (MCPA),
(±)-2-(2,4-Dichlorphenoxy)-propionsäure (2,4-DP),
2,4-Dichlorphenoxy-essigsäure (2,4-D),
2,4,5-Trichlorphenoxy-essigsäure (2,4,5-T),
(±)-2-(2,4,5-Trichlorphenoxy)-propionsäure (Fenoprop),
2,3,6-Trichlorbenzoesäure (2,3,6-TBA).

Bevorzugt ist ein Verhältnis von einer Verbindung der Formel II zu einer Verbindung der Formel I von 4:1 bis 12:1. Gleichwohl ist das Verhältnis praktisch nicht durch einen höchsten möglichen Wert begrenzt.

Um die Kristallisation der Verbindung der Formel I aus dem wässrigen erfindungsgemässen Mittel zu vermeiden, kann sich die Verwendung einer kleinen Menge eines zusätzlichen Lösungsmittels als nützlich erweisen. Jedoch wird die Menge an zusätzlichem Lösungsmittel kleiner sein als die Menge, die die Schwierigkeiten, insbesondere die Dampfabtrift, bei üblicher emulgierbarer Konzentration verursacht. Weiterhin ist die Verwendung eines zusätzlichen Lösungsmittels nützlich bei der Überwindung der Schwierigkeiten, die mit dem Gebrauch der erfindungsgemässen wässrigen Mittel bei Temperaturen unter dem Gefrierpunkt verbunden sind, wobei eine gute Tief-Temperatur-Stabilität erreicht wird.

Wir haben gefunden, dass die Kristallisation aus dem erfindungsgemässen Mittel bei tieferen Temperaturen wirksam verhindert wird, wenn 1–10%, vorzugsweise 2–5 Gew.-%/Volumen eines aromatischen Lösungsmittels zugesetzt werden.

In Handel erhältliche Beispiele solcher aromatischer Lösungsmittel sind:

| | |
|---|---|
| Solvesco 200® | (ESSO Chemicals), |
| Shellsol R® | (SHELL Chemicals), |
| Heavy Naphta 90/190® | (Carless Solvents Ltd.), |

Xylol,
Phthalsäure-di-n-butylester und
1,2-Dichlorbenzol.

Die Acylderivate der Formel I werden zu den zugrundeliegenden Phenolen hydrolysiert, wenn man sie alkalischen Bedingungen aussetzt, wobei jedoch keine bedeutende Einbusse an biologischer Aktivität als Folge eintritt. Zur Verlangsamung solcher Hydrolyseerscheinungen in den erfindungsgemässen Salz/Ester-Formulierungen, die selbst einen basischen pH-Wert besitzen, z.B. im Bereich zwischen 9 und 12, wird wünschenswerterweise der Formulierung eine ausreichende Menge einer Säure zugesetzt um den pH-Wert auf einen Wert von 7 bis 8 zu senken. Allgemein verwendete organische Säuren, z.B. Xylolsulfonsäure, Zitronensäure, Essigsäure und die anorganische Säure Salpetersäure haben sich für diesen Zweck als brauchbar erwiesen. Ausser Salpetersäure sind die meisten anorganischen Säuren ungeeignet.

Die erfindungsgemässen herbiziden Mittel können ein oberflächenaktives Mittel enthalten, welches lediglich nichtionischen Charakters zu sein braucht, wie z.B. Alkoholäthoxylat oder ein Äthylenoxid-Propylenoxid-Polymeres. Gewünschtenfalls kann aber auch ein anionisches oberflächenaktives Mittel verwendet werden.

Die wässrigen erfindungsgemässen Mittel können durch einfaches Vermischen der Verbindungen der Formel I mit denen der Formel II und beliebigen Zuschlagmitteln und anschliessendes Verdünnen dieser Mischung mit Wasser hergestellt werden.

Um die Herstellung einer stabilen Zubereitung sicherzustellen, die die oben aufgelisteten Anforderungen erfüllt, werden vorzugsweise die folgenden Arbeitsschritte der Reihe nach befolgt:

a) Es wird eine Lösung der Verbindung der Formel II hergestellt, gegebenenfalls werden alle oberflächenaktiven Substanzen unter Rühren zugesetzt und dann wird diese Lösung mit einer geeigneten Säure auf einen konstanten pH-Wert von ungefähr 7,5 gepuffert.

b) Sodann wird die Verbindung der Formel I unter Rühren zugesetzt, bis eine klare Lösung erhalten wird, wobei zur Erleichterung des Lösungsvorganges erwärmt werden kann und

c) danach wird gegebenenfalls ein zusätzliches Lösungsmittel zugegeben und anschliessend auf das gewünschte Volumen mit Wasser aufgefüllt.

Man erhält so eine klare, stabile Lösung.

Die wässrigen herbiziden Mittel gemäss dieser Erfindung können zur Pflanzenwuchsbeeinflussung bei einem oder mehreren breitblättrigen Unkräutern verwendet werden. Solche Unkräuter sind: Günsel, Amsinckia, roter Gauchheil, Ackerkrummhals, stinkende Hundskamille, Hundspetersilie, Melde, schwarzer Senf, Hirtentäschel, Kornblume, Vogelmiere, Fetthenne, Habichtskraut, Reismelde, Nagelkraut, Saatwucherblume, Ackerkratzdistel, Ackerwinde, wilde Möhre, Rittersporn, Schachtelhalm, Rosenstorchschnabel, Gartenwolfsmilch, Schottendotter, Scharbockskraut, Erdrauch, Ackerhohlzahn, Franzosenkraut, Klettenlabkraut, Storchenschnabel, Taubnessel, rote Taubnessel, gemeiner Rainkohl, Frauenspiegel, Ackersteinsame, wilde Kamille, geruchlose Kamille, Hopfenluzerne, weisses Leimkraut, Ackerminze, Bingelkraut, Ackervergissmeinnicht, Klatschmohn, Breitwegerich, Spitzwegerich, Vögelknöterich, Windenknöterich, weisser Flohknöterich, gemeiner Knöterich, scharfer Hahnenfuss, Ackerhahnenfuss, Ackerrettich, stumpfblättriger Ampfer, krauser Ampfer, gemeines Kreuzkraut, Ackersenf, schwarzer Nachtschatten, Gänsedistel, Ackerspark, gemeine Vogelmiere, Pfennigkraut, echte Kamille, Brennessel, Ehrenpreis, efeublättriger Ehrenpreis, Ackerehrenpreis, Wicke, Stiefmütterchen.

Die Aufwandmenge des erfindungsgemässen

wässrigen Mittels, die auf die zu behandelnden Pflanzen appliziert werden muss, schwankt in Abhängigkeit von z.B. der Art der Unkräuter, der Zusammensetzung des angewandten Mittels, der Anwendungsart und -zeit und dem Vorhandensein einer Nutzkultur. In der Regel werden bei Aufwandmengen von 0,63–2,8 kg Aktivsubstanz/Hektar in Getreidekulturen in Grossbritannien gute Ergebnisse erzielt.

Die erfindungsgemässen Mittel sind insbesondere zur Anwendung auf Flächen geeignet, auf denen Kulturpflanzen angepflanzt werden sollen oder auf denen Kulturpflanzen bereits heranwachsen.

Zur Behandlung geeignete Kulturen umfassen Zuckerrohr, Zwiebeln, Lauch, Gräser, Flachs, Grünfutterpflanzen und Getreide wie z.B. Weizen, Gerste, Hafer und Roggen.

Gegenüber den früher bekannten «Nur-Salz»- oder «Nur-Ester»-Formulierungen von Gemischen von Verbindungen der Formeln I und II, haben die erfindungsgemässen Mittel die folgenden Vorteile:

a) HBN-Ester und kernchloriertes Phenyl-, Phenylalkyl- oder Phenoxyalkylcarbonsäuresalz sind in einem einzigen Produkt formuliert, während augenblicklich die Bauern in einem Sprühtank ein emulgierbares HBN-Konzentrat mit einer Phenoxyalkansäuresalz-Lösung mischen müssen, um die obige Mischung von Wirkstoffen zu erhalten. Folglich wird sowohl die Zubereitungszeit verkürzt, als auch die Möglichkeit für den Bauern, Fehler beim Abmessen zu machen, vermindert und schliesslich ist die Verwendung einer einzelnen Packung zweckmässiger. Ausserdem werden auch Probleme überwunden, die mit der physikalischen Unverträglichkeit der Tankmischungen verbunden sind.

b) Das hauptsächliche Lösungsmittel ist Wasser. Dadurch hat das resultierende Mittel, verglichen mit den auf der Basis von Öl hergestellten, Ester enthaltenden Formulierungen, einen hohen Flammpunkt, was wiederum eine geringere Gefahr für Hersteller und Verbraucher bedeutet.

c) Die HBNs liegen in Form der Ester vor, die biologisch aktiver und «regenbeständiger» sind als ihre entsprechenden Salzderivate.

d) Die erfindungsgemässen Mittel verursachen durch Flüchtigkeit und Dampfabtrift geringe oder keine Schädigung bei empfindlichen Kulturen auf anstossenden Feldern.

Die vorliegende Erfindung wird durch die folgenden Beispiele näher erläutert.

Beispiel 1

Zur wässrigen Lösung von 44,8 Gewichtsteilen Mecoprop-Säure in Form ihres Kaliumsalzes werden 2,0 Gewichtsteile ®Ethylan CD 916 (ein Alkoholäthoxylat) und 2,0 Gewichtsteile ®Tetronic 994 (ein Äthylenoxid-Propylenoxid-Copolymer an EDTA) zugesetzt. Nachdem die Detergentien gelöst sind, wird die Lösung durch Zugabe von ungefähr 1,3 Gewichtsteilen käuflicher 65%iger Xylolsulfonsäure (®Eltesol XA 65) auf einen pH-Wert von 7,5 gebracht. Dann werden 5,6 Gewichtsteile Ioxynil als Oktansäureester und 5,6 Gewichtsteile Bromoxynil als Oktansäureester zugesetzt und die Mischung wird bis zur vollständigen Auflösung gerührt. Nach Zusatz von 3,0 Gewichtsteilen eines naphthalinischen Lösungsmittels (®Solvesso 200) und Rühren bis zur Auflösung, wird Wasser bis auf 100% des Volumens aufgefüllt. Das Rühren wird fortgesetzt, bis ein homogenes Produkt erhalten wird.

Beispiel 2

Unter Verwendung der im Beispiel 1 beschriebenen Verfahrensweise wird das folgende Mittel formuliert:

49,0 Gewichtsteile Mecoprop-Säure in Form der Kaliumsalz-Lösung,
7,0 Gewichtsteile Ioxynil als Oktansäureester,
7,0 Gewichtsteile Bromoxynil als Oktansäureester,
1,5 Gewichtsteile ®Eltesol XA 65,
2,0 Gewichtsteile ®Ethylan CD 916,
2,0 Gewichtsteile ®Tetronic 904,
5,0 Gewichtsteile ®Solvesso 200 und
Wasser bis auf 100% des Volumens.

Die in den Beispielen 1 und 2 angegebenen Mittel die vorher aufgezählten Kriterien:
Erscheinungsbild: homogene Lösungen
Verdünnung mit Wasser: bei der Prüfung nach dem CIPAC-Test MT 36: sofortiges Emulgieren zu einer stabilen Emulsion
Stabilität: stabil bei Raumtemperatur in der fertigen Verpackung
Tief-Temperatur-Stabilität: bei der Prüfung nach dem CIPAC-Test MT 39 tritt oberhalb von 0 °C keine Kristallisation auf.

Zu Vergleichszwecken wurde eine gleiche Formulierung unter Weglassen des ®Solvesso 200 hergestellt. Während das Mittel des Beispiels 2 bei Absenkung der Umgebungstemperatur auf 0 °C klar blieb, wurden aus der Formulierung ohne ®Solvesso 200 die HBN-Bestandteile kurz nach der Absenkung der Umgebungstemperatur auf unter 20 °C abgeschieden.

Beispiele 3 bis 8

Unter Verwendung der im Beispiel 1 beschriebenen Verfahrensweise werden die folgenden erfindungsgemässen Mittel formuliert:

Beispiel 3

448 g/l Mecoprop-Säure in Form wässriger Kaliumsalz-Lösung,
56 g/l Ioxynil als Oktansäureester,
56 g/l Bromoxynil als Oktansäureester,
30 g/l ®Solvesso 200,
20 g/l ®Dispersant SS Liquid (Natriumsalz einer polymeren organischen Sulfonsäure),
ca. 35 g/l Milchsäure (50%, technisch) und
Wasser bis auf 100% des Volumens.

Beispiel 4

448 g/l Mecoprop-Säure in Form wässriger Kaliumsalz-Lösung,
56 g/l Ioxynil als Oktansäureester,

56 g/l Bromoxynil als Oktansäureester,
30 g/l ®Solvesso 200,
30 g/l ®Soprophor FL (neutralisierter organischer Phosphorsäureester),
ca. 30 g/l Milchsäure (50%, technisch) und
Wasser bis auf 100% des Volumens.

Beispiel 5
480 g/l Mecoprop-Säure in Form wässriger Kaliumsalz-Lösung,
50 g/l Ioxynil als Oktansäureester,
50 g/l Bromoxynil als Oktansäureester,
30 g/l ®Tetronic 904,
10 g/l ®Ethylan CD 916,
ca.
20 g/l Xylolsulfonsäure (65%),
5 g/l Xylol und
Wasser bis auf 100% des Volumens.

Beispiel 6
448 g/l Mecoprop-Säure in Form wässriger Kaliumsalz-Lösung,
50 g/l Ioxynil als Oktansäureester,
56 g/l Bromoxynil als Oktansäureester,
20 g/l ®Tetronic 904,
20 g/l ®Ethylan CD 916,
ca.
20 g/l Xylolsulfonsäure (65%),
40 g/l Phthalsäure-di-n-butylester und
Wasser bis auf 100% des Volumens.

Beispiel 7
448 g/l Mecoprop-Säure in Form wässriger Kaliumsalz-Lösung,
56 g/l Ioxynil als Oktansäureester,
56 g/l Bromoxynil als Oktansäureester,
40 g/l ®Agrimul UE (Phosphorsäureester),
ca.
10 g/l Xylolsulfonsäure (65%),
50 g/l ®Solvesso 200 und
Wasser bis auf 100% des Volumens.

Beispiel 8
448 g/l Mecoprop-Säure in Form wässriger Kaliumsalz-Lösung,
10 g/l Ioxynil als Oktansäureester,
10 g/l Bromoxynil als Oktansäureester,
20 g/l ®Tetronic 904,
20 g/l ®Ethylan CD 916,
ca.
5 g/l Xylolsulfonsäure (65%),
20 g/l ®Solvesso 200 und
Wasser bis auf 100% des Volumens.

Beispiel 9
Das folgende Mittel aus
300 g/l Isoproturon in Form von ®Hytane 500L (ex Ciba-Geigy),
203 g/l Mecoprop-Säure in Form von wässriger Kaliumsalz-Lösung,
30 g/l Bromoxynil als Oktansäureester,
40 g/l ®Dispersant SS Liquid,
20 g/l ®Phospholan PNP-9 (Phosphorsäureester),
ca.
10 g/l Xylolsulfonsäureester,
5 g/l Xylol und
Wasser bis auf 100% des Volumens
wird in folgender Weise zubereitet:

Man löst das ®Dispersant SS Liquid, die Xylolsulfonsäure und ®Phospholan PNP-9 vollständig in Mecoprop-Säuresalz-Lösung auf, setzt den geschmolzenen Bromoxynil-Oktansäureester und das Xylol zu und kühlt die Lösung unter ständigem Rühren auf 20 °C ab. Dann setzt man das ®Hytane 500L zu bis eine homogene Suspension entsteht und füllt mit Wasser bis auf das vorgesehene Volumen auf.

Beispiel 10
Das folgende Mittel aus
300 g/l Isoproturon in Form von ®Hytane 500L,
203 g/l Mecoprop-Säure in Form von wässriger Kaliumsalz-Lösung,
20 g/l Bromoxynil als Oktansäureester,
7 g/l Ioxynil als Oktansäureester,
15 g/l ®Phospholan PNP-9,
25 g/l ®Agrimul UE,
40 g/l ®Dispersant SS Liquid,
5 g/l ®Solvesso 200 und
Wasser bis auf 100% des Volumens
wird in folgender Weise zubereitet:

Man löst ®Dispersant SS Liquid, ®Agrimul UE und ®Phospholan PNP-9 vollständig in Mecoprop-Säuresalz-Lösung auf, setzt die geschmolzenen Bromoxynil- und Ioxyniloktansäureester und ®Solvesso 200 zu und kühlt die Lösung unter ständigem Rühren auf 20°C ab. Dann setzt man das ®Hytane 500L zu bis eine homogene Suspension entsteht und füllt mit Wasser bis auf das vorgesehene Volumen auf.

Beispiel 11
Das folgende Mittel aus
300 g/l Isoproturon in Form von ®Hytane 500L,
203,6 g/l Mecoprop-Säure in Form von wässriger Kaliumsalz-Lösung,
13 g/l Bromoxynil als Oktansäureester,
28 g/l Ioxynil als Natriumsalz,
15 g/l ®Phospholan PNP-9,
25 g/l ®Agrimul UE,
40 g/l ®Dispersant SS Liquid,
10 g/l ®Solvesso 200 und
Wasser bis auf 100% des Volumens
wird in folgender Weise zubereitet:

Man löst ®Dispersant SS Liquid, Ioxynil-Natriumsalz, ®Agrimul UE und ®Phospholan PNP-9 in Mecoprop-Säuresalz-Lösung vollständig auf, setzt den geschmolzenen Bromoxyniloktansäureester und ®Solvesso 200 zu und kühlt die Lösung unter ständigem Rühren auf 20 °C ab. Dann setzt man das ®Hytane 500L zu bis eine homogene Suspension entsteht und füllt mit Wasser bis auf das vorgesehene Volumen auf.

**Patentansprüche**

1. Wässrige herbizide Mittel, dadurch gekennzeichnet, dass sie

a) einen oder mehrere Ester der Formel I

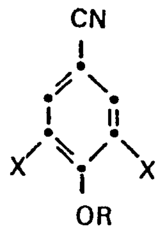

I

worin beide X für ein Halogenatom stehen und R eine gegebenenfalls substituierte Acylgruppe bedeutet, die abgeleitet ist von einer aliphatischen Carbonsäure mit 1–12 Kohlenstoffatomen, und

b) ein oder mehrere kernchlorierte Phenyl-, Phenylalkyl- oder Phenoxyalkylcarbonsäuresalze der Formel II

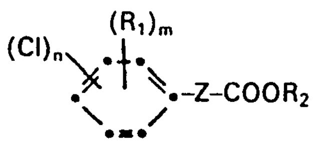

II

enthält, worin n die Zahlen 1, 2 oder 3, m die Zahlen von 1 bis 4, $R_1$ Wasserstoff, $C_1$–$C_{12}$-Alkyl oder $C_1$–$C_{12}$-Alkoxy, Z eine direkte Bindung oder eine unverzweigte oder verzweigte Alkylenbrücke mit 1–6 Kohlenstoffatomen, vorzugsweise 1–3 Kohlenstoffatomen, oder eine unverzweigte oder verzweigte Sauerstoffalkylenbrücke mit 1–6 Kohlenstoffatomen, wobei das Sauerstoffatom direkt an den Benzolring gebunden ist, und $R_2$ ein Alkalimetallatom, eine primäre, sekundäre oder tertiäre Alkylamino-, Hydroxyalkylamino- oder -ammoniumgruppe bedeuten, wobei das relative Gewichtsverhältnis von Komponente (b) zur Komponente (a) mindestens 3:1 beträgt.

2. Mittel gemäss Anspruch 1, dadurch gekennzeichnet, dass die Substituenten X in den Verbindungen der Formel I gleich sind und Brom oder Jod bedeuten.

3. Mittel gemäss einem der Ansprüche 1 oder 2, dadurch gekennzeichnet, dass R in den Verbindungen der Formel I eine gegebenenfalls substituierte Acylgruppe bedeutet, die abgeleitet ist von einer aliphatischen Carbonsäure mit 2 bis 8 Kohlenstoffatomen.

4. Mittel gemäss einem der obigen Ansprüche, dadurch gekennzeichnet, dass $R_1$ in den Verbindungen der Formel II Wasserstoff oder $C_1$–$C_4$-Alkyl bedeutet.

5. Mittel gemäss Anspruch 4, dadurch gekennzeichnet, dass $R_1$ Wasserstoff oder Methyl bedeutet.

6. Mittel gemäss einem der obigen Ansprüche, dadurch gekennzeichnet, dass $R_2$ in den Verbindungen der Formel II Natrium oder Kalium bedeutet.

7. Mittel gemäss einem der obigen Ansprüche, dadurch gekennzeichnet, dass die Verbindungen der Formel I einen Oktan- oder Heptansäureester einer Verbindung der Formel

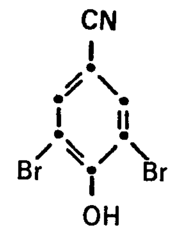

oder der Formel

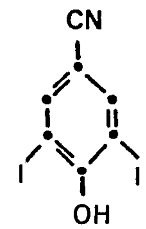

bedeutet.

8. Mittel gemäss einem der obigen Ansprüche, dadurch gekennzeichnet, dass die Verbindung der Formel II die Formel

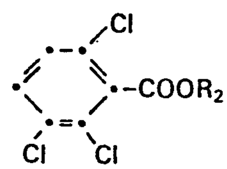

oder

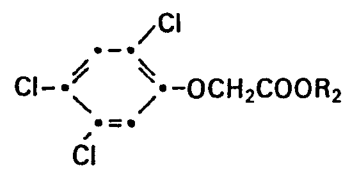

oder

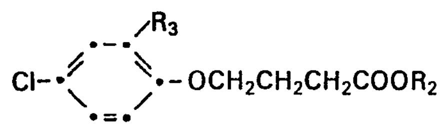

oder

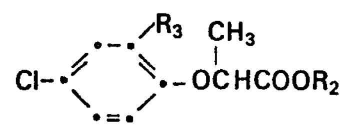

oder

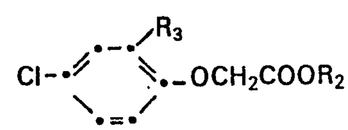

oder

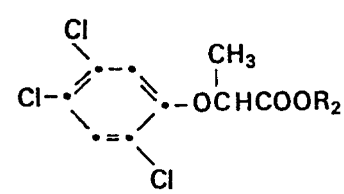

oder

hat, worin $R_2$ wie im Anspruch 1 definiert ist und $R_3$ Chlor oder Methyl bedeuten.

9. Mittel gemäss einem der obigen Ansprüche, dadurch gekennzeichnet, dass das Verhältnis der

Verbindung der Formel II zur Verbindung der Formel I 4:1 bis 12:1 beträgt.

10. Mittel gemäss einem der obigen Ansprüche, dadurch gekennzeichnet, dass es 1 bis 10 Gewichts-%/Volumen eines aromatischen Lösungsmittel enthält.

11. Mittel gemäss einem der obigen Ansprüche, dadurch gekennzeichnet, dass es eine organische Säure oder Salzpetersäure in einer ausreichenden Menge enthält, um den pH-Wert der gesamten Zubereitung in einem Bereich von 7 bis 8 zu halten.

12. Mittel gemäss einem der obigen Ansprüche, dadurch gekennzeichnet, dass es ein oberflächenaktives Mittel enthält.

13. Mittel gemäss Anspruch 12, dadurch gekennzeichnet, dass das oberflächenaktive Mittel nicht-ionisch oder anionisch ist.

14. Verfahren zur Herstellung eines wässrigen herbiziden Mittels gemäss Anspruch 1, dadurch gekennzeichnet, dass man

a) eine wässrige Lösung der Verbindung der Formel II gegebenenfalls zusammen mit den oberflächenaktiven Substanzen hergestellt und auf einen pH-Wert im Bereich von 7 bis 8 puffert,

b) unter Rühren die Verbindung der Formel I zusetzt, bis eine klare Lösung erhalten wird, wobei zur Erleichterung des Lösungsvorganges erwärmt werden kann und

c) gegebenenfalls ein zusätzliches Lösungsmittel zugibt und anschliessend auf das gewünschte Volumen mit Wasser verdünnt.

15. Verfahren zur Beeinflussung des Pflanzenwachstums von Unkräutern, dadurch gekennzeichnet, dass man ein wässriges herbizides Mittel gemäss Anspruch 1 appliziert.

16. Verfahren gemäss Anspruch 15, dadurch gekennzeichnet, dass es sich bei den behandelten Unkräutern um einjährige und mehrjährige breitblättrige Unkräuter handelt.

17. Verfahren gemäss Ansprüchen 15 und 16, dadurch gekennzeichnet, dass das wässrige Mittel, gemäss Anspruch 1, auf verunkrautete Nutzpflanzenflächen appliziert wird.

## Revendications

1. Agents herbicides aqueux, caractérisés en ce qu'ils contiennent

a) un ou plusieurs esters de formule I

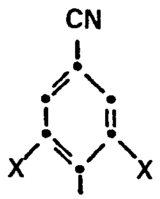

I

où chacun des deux X représente un atome d'hydrogène et R représente un groupe acyle éventuellement substitué, qui dérive d'un acide carboxylique aliphatique en C1 à C12, et

b) un ou plusieurs sels d'acide phényl-, phénylalcoyl- ou phénoxyalcoylcarboxylique chloré dans son noyau, de formule II

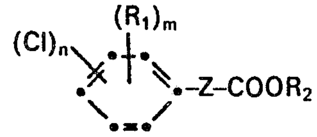

II

où n représente les nombres 1, 2 ou 3, m les nombres allant de 1 à 4, R1 représente un hydrogène, un alcoyle en C1 à C12 ou un alcoxy en C1 à C12, Z représente une liaison directe ou un pont alcoylène non ramifié ou ramifié en C1 à C6, de préférence en C1 à C3, ou un pont oxyalcoylène non ramifié ou ramifié en C1 à C6, où l'atome d'oxygène est directement lié au noyau benzène, et R2 représente un atome de métal alcalin, un groupe alcoylamino, hydroxyalcoylamino ou -ammonium primaire, secondaire ou tertiaire, où le rapport pondéral relatif du composant (b) au composant (a) s'élève au moins à 3:1.

2. Agent selon la revendication 1, caractérisé en ce que les substituants X dans les composés de formule I sont semblables et représentent un brome ou un iode.

3. Agent selon l'une des revendications 1 et 2, caractérisé en ce que R dans les composés de formule I représente un groupe acyle éventuellement substitué, qui dérive d'un acide carboxylique aliphatique en C2 à C8.

4. Agent selon l'une des revendications ci-dessus, caractérisé en ce que R1 dans les composés de formule II représente un hydrogène ou un alcoyle en C1 à C4.

5. Agent selon la revendication 4, caractérisé en ce que R1 représente un hydrogène ou un méthyle.

6. Agent selon l'une des revendications précédentes, caractérisé en ce que R2 dans les composés de formule II représente le sodium ou le potassium.

7. Agent selon l'une des revendications ci-dessus, caractérisé en ce que les composés de formule I représentent un ester d'acide octanoïque ou heptanoïque d'un composé de formule

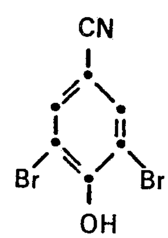

ou de formule

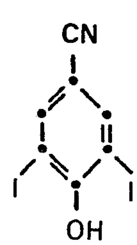

8. Agent selon l'une des revendications ci-dessus, caractérisé en ce que le composé de formule II a la formule

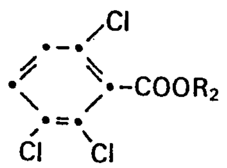

ou

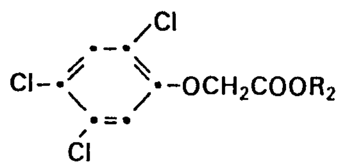

ou

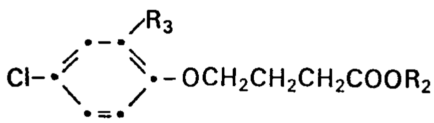

ou

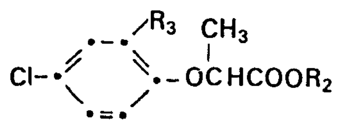

ou

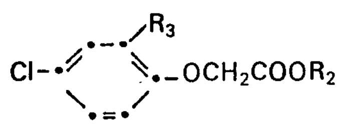

ou

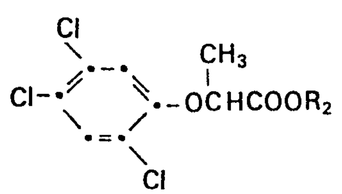

où R2 est tel que défini dans la revendication 1 et R3 représente un chlore ou un méthyle.

9. Agent selon l'une des revendications précédentes, caractérisé en ce que le rapport du composé de formule II au composé de formule I s'élève à 4:1 à 12:1.

10. Agent selon l'une des revendications ci-dessus, caractérisé en ce qu'il contient de 1 à 10% en poids/volume d'un solvant aromatique.

11. Agent selon l'une des revendications ci-dessus, caractérisé en ce qu'il contient un acide organique ou l'acide nitrique en une quantité suffisante pour maintenir le pH de l'ensemble de la préparation dans un intervalle allant de 7 à 8.

12. Agent selon l'une des revendications précédentes, caractérisé en ce qu'il contient un agent tensio-actif.

13. Agent selon la revendication 12, caractérisé en ce que l'agent tensio-actif est non ionique ou anionique.

14. Procédé de préparation d'un agent herbicide aqueux selon la revendication 1, caractérisé en ce que

a) on prépare une solution aqueuse du composé de formule II le cas échéant avec les substances tensio-actives et on tamponne dans un intervalle de pH allant de 7 à 8,

b) tout en agitant on ajoute le composé de formule I, jusqu'à ce qu'on obtienne une solution claire, où l'on peut chauffer pour faciliter le processus de dissolution et

c) le cas échéant on ajoute un solvant supplémentaire puis on dilue avec de l'eau au volume désiré.

15. Procédé pour influer sur la croissance végétale des mauvaises herbes, caractérisé en ce qu'on applique un agent herbicide aqueux selon la revendication 1.

16. Procédé selon la revendication 15, caractérisé en ce qu'il s'agit pour les mauvaises herbes traitées de mauvaises herbes à feuilles larges âgées d'une et de plusieurs années.

17. Procédé selon les revendications 15 et 16, caractérisé en ce qu'on applique l'agent aqueux, selon la revendication 1, à des surfaces de plantes utiles atteintes par les mauvaises herbes.

## Claims

1. An aqueous herbicidal composition comprising:

a) one or more esters having the formula:

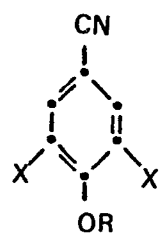

I

wherein each X is a halogen atom, and R is an unsubstituted or substituted acyl group derived from an aliphatic carboxylic acid containing 1 to 12 carbon atoms; and

b) one or more phenylcarboxylic, phenylalkylcarboxylic or phenoxyalkylcarboxylic acid salts which are chlorinated in the phenyl nucleus and have the formula:

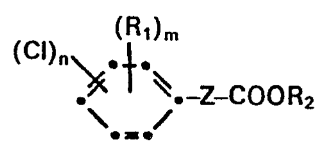

II

wherein n is 1, 2 or 3; m is 1 to 4; $R_1$ is H or $C_1$–$C_{12}$alkyl or $C_1$–$C_{12}$-alkoxy; Z is a direct bond, a straight chain or branched alkylene bridge containing 1 to 6, preferably 1 to 3, carbon atoms, or is a straight chain or branched –O–alkylene bridge containing 1 to 6 carbon atoms, in which the oxygen atom is bonded direct to the benzene ring; and $R_2$ is an alkali metal atom, a primary, secondary or tertiary alkylamino, hydroxyalkylamino or ammonium group; the relative weight ratio of component (b) to component (a) being at least 3:1.

2. A composition according to claim 1, wherein each X in the compounds of formula I is the same and is bromine or iodine.

3. A composition according to either of claims 1 or 2, wherein R in the compounds of formule I is an unsubstituted or substituted acyl group derived from an aliphatic carboxylic acid containing 2 to 8 carbon atoms.

4. A composition according to any one of the preceding claims, wherein $R_1$ in the compounds of formule II is H or $C_1$–$C_4$alkyl.

5. A composition according to claim 4, wherein $R_1$ is H or methyl.

6. A composition according to any one of the preceding claims, wherein $R_2$ in the compounds of formula II is sodium or potassium.

7. A composition according to any one of the preceding claims, wherein the compound of formula I is the octanoate or heptanoate of a compound having the formula:

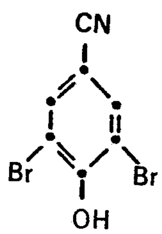

or the formula:

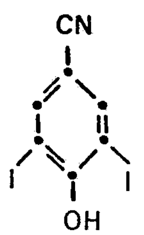

8. A composition according to any one of the preceding claims, wherein the compound of formula II has the formula:

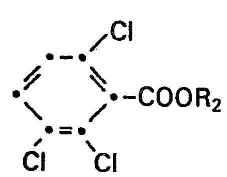

or

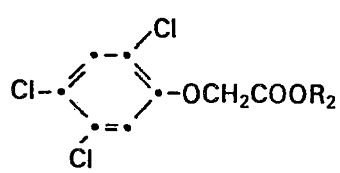

or

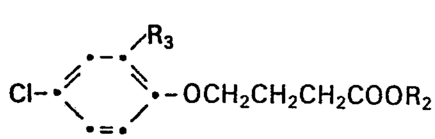

or

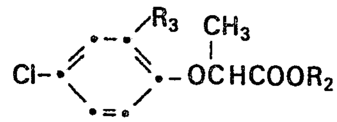

or

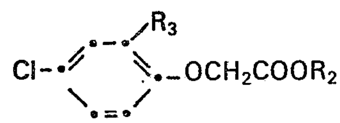

or

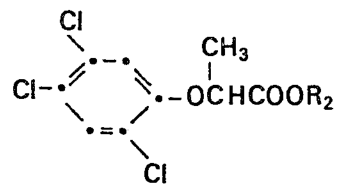

wherein $R_2$ is defined in claim 1 and $R_3$ is Cl or $CH_3$.

9. A composition according to any one of the preceding claims, wherein the ratio of the compound of formula II to the compound of formula I is from 4:1 to 12:1.

10. A composition according to any one of the preceding claims, wherein 1 to 10% weight/volume of an aromatic solvent is present.

11. A composition according to any one of the preceding claims, wherein an organic acid, or nitric acid, is present in an amount sufficient to maintain the pH value of the total composition in the range from 7 to 8.

12. A composition according to any one of the preceding claims, wherein a surface-active agent is present.

13. A composition according to claim 12, wherein the surface-active agent is non-ionic or anionic.

14. A process for the preparation of an aqueous herbicidal composition according to claim 1, which process comprises:

(a) preparing an aqueous solution of the compound of formula II with or without surface-active agents and buffering the solution to a pH value in the range from 7 to 8;

(b) adding, with agitation, the compound of formula I, until a clear solution is obtained, heat being optionally applied to facilitate dissolution; and

(c) optionally adding a co-solvent and then diluting with water to the desired volume.

15. A method of influencing the growth of weeds, which comprises applying an aqueous herbicidal composition according to claim 1.

16. A method according to claim 15, wherein the weeds treated are annual and perennial broad leaved weeds.

17. A method according to either of claims 15 or 16, wherein the aqueous composition according to claim 1 is applied to weed-infested crop areas.